# EUROPÄISCHE PATENTSCHRIFT

(11) **EP 0 565 902 B1**
(45) Veröffentlichungstag und Bekanntmachung des Hinweises auf die Patenterteilung: **27.12.1996**
(21) Anmeldenummer: 93104529.8
(22) Anmeldetag: 19.03.1993
(51) Int. Cl.: B65G 15/36, B65G 15/08, B65G 15/40, B65G 15/30

(54) **Fördergurt für Rohrgurt-Förderer**
Conveyor belt for tubular belt conveyor
Bande transporteuse pour transporteur à courroie tubulaire

(30) Priorität: 16.04.1992 DE 4212824
(43) Veröffentlichungstag der Anmeldung: 20.10.1993
(73) Patentinhaber: Svedala Industri (Deutschland) GmbH, 22047 Hamburg (DE)
(72) Erfinder: Hinkelmann, Rainer, Dr., W-2000 Hamburg 73 (DE); Sander, Ulrike, W-2000 Hamburg 76 (DE); Begemann, Helmut, W-2104 Hamburg 92 (DE)
(74) Vertreter: MEISSNER, BOLTE & PARTNER

(56) Entgegenhaltungen:
- WO-A-81/01697
- DE-A- 3 839 061
- DE-A- 3 910 911

## Beschreibung

Die Erfindung betrifft einen Fördergurt für Rohrgurtförderer mit Überlappung des Fördergurtes an den Rändern bei der Gurtrohr-Bildung, bestehend aus Gummi oder gummiähnlichem Kunststoff und mehreren darin eingebetteten, in Längsrichtung des Fördergurtes verlaufenden Stahlseilen als Zugträger, die über die Breite des Fördergurtes mit gleichem Abstand untereinander angeordnet sind.

Bei Rohrgurtförderern, auch Schlauchgurtförderer oder Pipe Conveyor genannt, wird der Fördergurt in der eigentlichen Förderstrecke hinter der Ausgabezone und vor der Abgabezone mit mechanischen Mitteln zu einem geschlossenen Rohr geformt. Bei den neueren Konstruktionen erfolgt die Schließung des "Rohres" durch Überlappung des Fördergurtes an seinen beiden Rändern. Die Gurtrohr-Bildung stellt hohe Anforderungen an den Aufbau des Fördergurts, die mit denjenigen eines normalen Fördergurtes nicht zu vergleichen sind. Während bei normalen Fördergurten die Anforderungen gute Muldenbildung, hohe Zugfestigkeit, Korrosionsschutz der Stahlarmierung und Widerstandsfähigkeit der Gurtlaufseite und der Tragseite im Vordergrund stehen, kommt es bei Rohrfördergurten zusätzlich darauf an, eine möglichst gute Kreisbildung mit dichter, nicht abstehender Überlappung zu erreichen. Dazu darf die außenliegende Randzone des Fördergurtes nicht nach außen und die innenliegende Randzone nicht übermäßig nach innen klappen. Hinzukommt, daß sich der Fördergurt trotz der Rohrbildung in der vertikalen Ebene und auch in der horizontalen Ebene, also in Kurven, gut ablenken lassen soll, d.h., er soll bei jeglicher Biegung formstabil und spurgetreu bleiben. Schließlich soll keine Verdrehung des zum Rohr geformten Fördergurtes in dem Sinne eintreten, daß die normalerweise oben befindliche Überlappung in stärkerem Maße auf die eine oder andere Seite wandert.

Wenn ein Fördergurt hohe Zugkräfte aufzunehmen hat, sei es wegen großer Länge der Förderstrecke oder hoher Beladung, wird im allgemeinen die Bauform mit eingebetteten Stahlseilen als Zugträger bevorzugt. Dabei wird im allgemeinen als besonderer Vorteil die geringe elastische Dehnung der Stahlseile angesehen.

Aus der DE-OS 39 10 911 ist ein gattungsgemäßer Rohrfördergurt mit Überlappung des Fördergurtes an den Rändern bei der Gurtrohr-Bildung bekannt, der aus Gummi oder gummiähnlichem Kunststoff und mehreren darin eingebetteten, in Längsrichtung des Fördergurtes verlaufenden Stahlseilen als Zugträger besteht, wobei die Zugträger über die Breite des Fördergurtes gleichförmig verteilt angeordnet sind. Die Stahlseile dieses bekannten Fördergurtes weisen im Überlappungsbereich ("A") entweder einen geringeren Durchmesser auf, als im Restgurtbereich ("B"), oder aber die Stahlseile haben dort eine andere Festigkeit. Durch diese unterschiedliche konstruktive Behandlung des Fördergurtaufbaus soll zumindest ein Teil der vorstehend erläuterten Anforderungen an einen Rohrfördergurt erfüllt werden. Es hat sich jedoch gezeigt, daß dies mit jener bekannten Konstruktion nur bedingt möglich ist, insbesondere was die Kurvengängigkeit des Fördergurtes bei kleineren Kurvenradien sowie die Einmuldungslänge betrifft. Außerdem ist es vielfach aufwendiger, einen Stahlseil-Fördergurt mit unterschiedlichen oder unterschiedlich verteilt angeordneten Stahlseilen zu produzieren.

Die Druckschrift WO 81/01697 betrifft keinen Rohrfördergurt, sondern einen normalen Stahlseil-Fördergurt, der auch als Muldenförderer bezeichnet wird. Dieser Muldenförderer weist über dessen Breite verteilte und in Längsrichtung verlaufende Stahlseile auf, und eine quersteife Einlage auf der Tragseite, die direkt über einer anderen, durchgehenden quersteifen Einlage angeordnet ist. Die quersteife Einlage reicht zwar nicht in die Randzonen des Fördergurtes, was allerdings durch die direkt darunterliegende quersteife Einlage ausgeglichen wird. Insofern ist dieser Fördergurt mit einem Rohrfördergurt nicht vergleichbar. Ferner weist die Einlage einen hohen Kompressionswiderstand in Querrichtung auf, um die Randbereiche, die etwa jeweils ein Drittel der Gurtbreite einnehmen, zum Mulden ausreichend flexibel zu halten. Bei einem Rohrfördergurt ist der Begriff "Randbereich" ganz anders definiert; dort ist die tragseitige quersteife Einlage durchgehend mit Ausnahme von schmalen Überlappungsbereichen ausgebildet. Auch das zeigt, daß die Probleme der Randbereiche, die bei einem Rohrgurtförderer als die Überlappungsbereiche definiert werden, grundsätzlich verschieden zu den Problemen bei einem normalen Stahlseilfördergurt sind.

Der vorliegenden Erfindung liegt die Aufgabe zugrunde, einen Stahlseil-Fördergurt mit sich rohrförmig überlappenden Rändern zu schaffen, der bei einer einfachen Herstellung und minimaler Verdrehung eine gute Kurvengängigkeit bei kreisförmigem, dichtem Fördergurt aufweist.

Diese Aufgabe wird erfindungsgemäß durch einen Fördergurt für Rohrgurtförderer mit den Merkmalen des Anspruchs 1 oder des Anspruchs 2 gelöst.

Die genannten Dehnungswerte für die Stahlseile beziehen sich auf eine Meßmethode in Anlehnung an die ISO-Norm 9856: dort wird vorgeschlagen, aus dem zu untersuchenden Fördergurt einen Probekörper mit voller Dicke in Längsrichtung herauszuschneiden und einer sinusförmigen Zugspannung zwischen 2% und 10% der Nennfestigkeit des Gurtes auszusetzen. Für die Zwecke der vorliegenden Erfindung wurde die Zugkraft für jene Tests auf einen Wert zwischen 2% und 20% der Nennfestigkeit des Stahlseils erhöht. Die Dehnung ist sodann der Quotient aus dem Unterschied der Längen, die das Stahlseil bei einer Belastung mit 2% seiner Nennfestigkeit einerseits und bei einer Belastung mit 20% seiner Nennfestigkeit andererseits hat, und der Länge der Stahlseile ohne Belastung.

Die Vorteile des erfindungsgemäßen Rohrfördergurtes liegen insbesondere darin, daß er bei einem einfachen Aufbau mit ausschließlich gleichen Stahlseilen aufgrund der Verwendung besonderer Stahlseile eine gute Kurvengängigkeit besitzt und die besonderen Anforderungen an einen Rohrfördergurt erfüllt. Durch Kurvenführungen des Fördergurtes kommt es nämlich zu einer Entlastung der im Kurveninneren liegenden Seile, und die gegenüberliegenden Seile werden gedehnt. Bei einer konkaven Kurve liegt der Überlappungsbereich im Kurveninneren, wodurch es folglich zu einer Entlastung der Seile in den Gurträndern kommt. Hier stellt der erfindungsgemäße Einsatz dehnungsreicher Seile sicher, daß selbst bei geringer Belastung eine ausreichende Dehnung der Seile in den Gurträndern erreicht wird, um eine dicht schließende Überlappung, und somit eine saubere Rohrbildung, zu garantieren. Alles in allem wirken sämtliche Komponenten des erfindungsgemäßen Rohrfördergurtes optimal zusammen, so daß die besten Voraussetzungen für eine Förderbandanlage mit hervorragender Leistungsfähigkeit und langer Lebensdauer gegeben sind.

Vorteilhafte Weiterbildungen der Erfindung sind in den Unteransprüchen angegeben.

Vorzugsweise liegen die genannten Dehnungswerte der Stahlseile über 0,35%, gemessen bei 2 bis 20% ihrer Nennfestigkeit.

Vorzugsweise besitzt die quersteife Gewebeeinlage auf der Laufseite in Schußrichtung Stahlkorde und in Kettrichtung textile, vorzugsweise aus Polyamid bestehende Fäden oder Korde. Diese textilen Fäden oder Korde können beispielsweise aus Polyamid bestehen und dienen im wesentlichen dem Zusammenhalt der Stahlkorde.

Zur Ausbildung der auf der Tragseite möglichen Einlage ist vorzugsweise vorgesehen, daß diese Einlage ein Gewebe aus Synthesefäden oder Synthesekorden in Kette und Schuß ist.

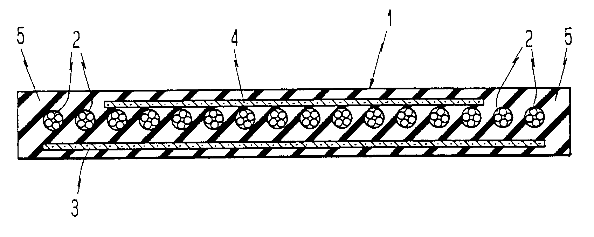

Die einzige Figur zeigt ein bevorzugtes Ausführungsbeispiel eines Fördergurtes für Rohrgurtförderer im Querschnitt.

Der dargestellte Fördergurt 1 besteht aus Gummi und hat einen Zugträger aus mehreren, in Längsrichtung des Fördergurtes verlaufenden Stahlseilen 2, die in den Gummikörper des Fördergurtes eingebettet sind. Die Stahlseile sind untereinander alle gleich, d.h. sie haben alle die gleichen physikalischen Eigenschaften, haben alle den gleichen Durchmesser und sind, in einer Ebene liegend, mit gleichem gegenseitigen Abstand in Querrichtung des Fördergurtes angeordnet, d.h. gleichförmig über die Breite des Fördergurtes verteilt. Es handelt sich um spezielle, sonst für Stahlseil-Fördergurte nicht eingesetzte Seile mit einer vergleichsweise hohen Dehnung von mehr als 0,3 %, gemessen bei 2 bis 20 % ihrer Nennfestigkeit gemäß ISO-Norm 9856.

Unterhalb der Stahlseile 2, auf der Laufseite 7 des Fördergurtes 1, d.h. auf der bei der Rohrbildung außen liegenden Seite, ist in den Fördergurt 1 eine durchgehende quersteife Einlage 3 eingebettet. "Durchgehend" meint hier, daß diese Einlage bzw. Querarmierung im wesentlichen über die ganze Breite des Fördergurtes reicht, wobei allerdings der Randschutz des Fördergurtes nicht mit erfaßt wird, damit keine erwähnenswerte Korrosion oder kein erwähnenswerter Verschleiß entsteht. Die durchgehende quersteife Einlage 3 ist ein Gewebe, das in Schußrichtung, also in Querrichtung des Fördergurtes, relativ biegesteife Stahlkorde und in Kettrichtung, d.h. in Längsrichtung des Fördergurtes, textile Korde aus Polyamid aufweist. Die Polyamidkorde dienen im wesentlichen nur dem Zusammenhalt des Gewebes.

Ferner weist der Fördergurt 1 auf der Tragseite 6 oberhalb der Stahlseile 2 eine weitere textile Einlage 4 auf, die nur im mittleren Bereich des Fördergurtes vorgesehen ist und sich auch nicht in den Randzonen 5 befindet, die sich im Betrieb des Fördergurtes bei der Gurtrohr-Bildung gegenseitig überlappen. Die textile Einlage bzw. Querarmierung ist ebenfalls ein Gewebe, das jedoch sowohl in der Kette wie auch im Schuß aus Synthesefäden oder Synthesekorden besteht. Ein beispielhaftes Material ist hier Polyester. Wie die laufseitige Einlage 3 liefert auch die tragseitige Einlage 4 keinen Beitrag zur Zugfestigkeit des Fördergurtes, sondern erzeugt im wesentlichen nur Quersteifigkeit, und zwar das auch im Zusammenwirken mit der laufseitigen Einlage 3 aufgrund des Abstandes zwischen den beiden Einlagen in Richtung der Höhe des Fördergurtes.

## Patentansprüche

1. Fördergurt für Rohrgurtförderer mit Überlappung des Fördergurtes an den Rändern bei der Gurtrohr-Bildung, bestehend aus Gummi oder gummiähnlichem Kunststoff und mehreren darin eingebetteten, in Längsrichtung des Fördergurtes (1) verlauffenden Stahlseilen (2) als Zugträger, die über die Breite des Fördergurtes (1) mit gleichem Abstand untereinander angeordnet sind,
dadurch gekennzeichnet,
a) daß die Stahlseile (2) alle gleich sind;
b) daß sie eine Dehnung von mehr als 0,30%, gemessen bei 2 bis 20% ihrer Nennfestigkeit, haben; und
c) daß auf der Tragseite eine durchgehende quersteife textile Einlage (4) angeordnet ist, die sich nicht in den beiden Randzonen (5) des Fördergurtes befindet, die sich bei der Gurtrohr-Bildung überlappen.

2. Fördergurt für Rohrgurtförderer mit Überlappung des Fördergurtes an den Rändern bei der Gurtrohr-Bildung, bestehend aus Gummi oder gummiähnlichem Kunststoff und mehreren darin eingebetteten, in Längsrichtung des Fördergurtes (1) verlauffenden Stahlseilen (2) als Zugträger, die über die Breite des Fördergurtes (1) mit gleichem Abstand untereinander angeordnet sind,
dadurch gekennzeichnet,
a) daß die Stahlseile (2) alle gleich sind;
b) daß sie eine Dehnung von mehr als 0,30%, gemessen bei 2 bis 20% ihrer Nennfestigkeit, haben; und
c) daß auf der Laufseite eine durchgehende quersteife Gewebeeinlage (3) angeordnet ist, die sich in Querrichtung über die gesamte Breite des Fördergurtes erstreckt.

3. Fördergurt nach Anspruch 1 oder 2,
dadurch gekennzeichnet, daß
die Stahlseile (2) eine Dehnung von mehr als 0,35%, gemessen bei 2 bis 20% ihrer Nennfestigkeit, haben.

4. Fördergurt nach einem der vorstehenden Ansprüche,
dadurch gekennzeichnet, daß
die quersteife Gewebeeinlage (3) in Schußrichtung Stahlkorde und in Kettrichtung textile, vorzugsweise aus Polyamid bestehende Fäden oder Korde aufweist.

5. Fördergurt nach einem der Ansprüche 1 bis 3,
dadurch gekennzeichnet, daß
die quersteife textile Einlage (4) auf der Tragseite ein Gewebe aus Polyesterfäden oder -korden in Kette und Schuß ist.

## Claims

1. Conveyor belt for tubular belt conveyors, with overlapping of the conveyor belt at the edges when the belt tube is formed, consisting of rubber or rubber-like synthetic material and of a plurality of steel cables (2) as tension carriers embedded therein and running in the longitudinal direction of the conveyor belt (1), which cables are arranged over the width of the conveyor belt (1) at an equal distance from one another,
characterised in that,
a) the steel cables (2) are all alike,
b) that they have an expansion of more than 0.30%, measured at 2 to 20% of their nominal strength; and
c) that on the carrying side a continuous, transversely rigid textile insert (4) is arranged which is not present in the conveyor belt's two edge areas (5) which overlap when the belt tube is formed.

2. Conveyor belt for tubular belt conveyors, with overlapping of the conveyor belt at the edges when the belt tube is formed, consisting of rubber or rubber-like synthetic material and of a plurality of steel cables (2) as tension carriers embedded therein and running in the longitudinal direction of the conveyor belt (1), which cables are arranged over the width of the conveyor belt (1) at an equal distance from one another,
characterised in that,
a) the steel cables (2) are all alike,
b) that they have an expansion of more than 0.30%, measured at 2 to 20% of their nominal strength; and
c) that on the backing side a continuous, transversely rigid textile insert (3) is arranged which extends in the transverse direction over the whole width of the conveyor belt.

3. Conveyor belt according to claim 1 or 2,
characterised in that
the steel cables (2) have an expansion of more than 0.35%, measured at 2 to 20% of their nominal strength.

4. Conveyor belt according to one of the previous claims,
characterised in that
the transversely rigid textile insert (3) has steel cords in the weft direction and textile threads or cords, preferably consisting of polyamide, in the warp direction.

5. Conveyor belt according to one of claims 1 to 3,
characterised in that
the transversely rigid insert (4) on the carrying side is a woven fabric made of polyester threads or cords in warp and weft.

## Revendications

1. Bande transporteuse pour convoyeur à bande tubulaire avec recouvrement de la bande transporteuse au niveau des bordures lors de la formation du tube de bande, constituée en caoutchouc ou en matière plastique analogue au caoutchouc, et comprenant plusieurs câbles d'acier (2) en tant que supports de traction, noyés dans la bande et s'étendant en direction longitudinale de la bande transporteuse (1), lesdits câbles d'acier étant agencés à la même distance les uns des autres sur la largeur de la bande transporteuse (1),
caractérisée en ce que :
a) tous les câbles d'acier (2) sont égaux ;
b) ils présentent un allongement supérieur à 0,30%, mesuré entre 2 et 20% de leur résistance norminale ; et
c) sur le côté porteur est agencé un insert textile continu (4) à rigidité transversale, qui ne se trouve pas dans les deux zones de bordure (5) de la bande transporteuse, qui se recouvrent lors de la formation du tube de bande.

2. Bande transporteuse pour convoyeur à bande tubulaire avec recouvrement de la bande transporteuse au niveau des bordures lors de la formation du tube de bande, constituée en caoutchouc ou en matière plastique analogue au caoutchouc, et comprenant plusieurs câbles d'acier (2) en tant que supports de traction, noyés dans la bande et s'étendant en direction longitudinale de la bande transporteuse (1), lesdits câbles étant agencés à la même distance les uns des autres sur la largeur de la bande transporteuse (1),
caractérisée en ce que :
a) les câbles d'acier (2) sont tous identiques ;
b) ils présentent un allongement supérieur à 0,30%, mesuré entre 2 et 20% de leur résistance nominale ; et
c) sur le côté de glissement est agencé un insert textile continu (3) à rigidité transversale, qui s'étend en direction transversale sur la totalité de la largeur de la bande transporteuse.

3. Bande transporteuse selon l'une ou l'autre des revendications 1 et 2, caractérisée en ce que les câbles d'acier (2) présentent un allongement supérieur à 0,35%, mesuré entre 2 et 20% de leur résistance nominale

4. Bande transporteuse selon l'une des revendications précédentes, caractérisée en ce que l'insert textile à rigidité transversale (3) comporte en direction de trame des câblés d'acier et en direction de chaîne des fils ou des câblés textiles, constitués de préférence en polyamide.

5. Bande transporteuse selon l'une des revendications 1 à 3, caractérisée en ce que l'insert textile à rigidité transversale (4) sur le côté porteur est un textile constitué de fils ou de câblés de polyester tant en chaîne qu'en trame.
